# EUROPÄISCHE PATENTSCHRIFT

(11) **EP 1 799 513 B1**
(45) Veröffentlichungstag und Bekanntmachung des Hinweises auf die Patenterteilung: **21.01.2009**
(21) Anmeldenummer: 05796330.8
(22) Anmeldetag: 11.10.2005
(51) Int. Cl.: B60R 13/08

(54) **WARMEISOLIERENDER UNTERBODENAUFBAU**
HEAT-INSULATING UNDERBODY STRUCTURE
BAS DE CAISSE A POUVOIR D'ISOLATION THERMIQUE

(30) Priorität: 11.10.2004 DE 202004015698 U
(43) Veröffentlichungstag der Anmeldung: 27.06.2007
(73) Patentinhaber: Rieter Technologies AG, 8406 Winterthur (CH)
(72) Erfinder: DE CIUTIIS, Hermann c/o Rieter Technologies AG, CH-8406 Winterthur (CH)
(74) Vertreter: Van Adrichem Geisseler, Johanna
(86) Internationale Anmeldenummer: PCT/CH2005/000627
(87) Internationale Veröffentlichungsnummer: WO 2006/039831

(56) Entgegenhaltungen:
- EP-A- 1 167 164
- DE-A1- 4 035 177
- DE-A1- 19 925 492
- DE-U1- 9 202 228
- US-A1- 2002 185 893

## Beschreibung

Die vorliegende Erfindung betrifft einen wärmeisolierenden Unterbodenaufbau gemäss Oberbegriff des Anspruchs 1, sowie ein für die Verwendung mit diesem Unterboden geeignetes Hitzeschild gemäss Anspruch 9.

Hitzeschilde, wie bspw. in der WO00/22285 beschrieben, sind auf dem Gebiet der modernen Fahrzeugtechnik hinlänglich bekannt und dienen dazu, den Fahrzeugunterboden von der von einzelnen Fahrzeugkomponenten, insbesondere Abgasrohren, Katalysatoren oder Schalldämpfer abgegebene Wärme zu isolieren. Da diese direkt auf den wärmeabstrahlenden Komponenten befestigten Hitzeschilde jedes Mal bei der Reparatur der obengenannten Fahrzeugkomponenten demontiert und nachträglich wieder montiert werden müssen, sind auf diesem Gebiet auch Hitzeschilde bekannt, welche am Fahrzeugunterboden befestigt sind.

So wird bspw. in der WO99/46147 ein Hitzeschild beschrieben, welches beim Auswechseln der obengenannten Fahrzeugkomponenten nicht demontiert werden muss. Dieses Hitzeschild liegt direkt am Unterboden eines Fahrzeugs an und ist gegenüber den wärmeabstrahlenden Fahrzeugkomponenten berührungsfrei angeordnet.

In der DE-U-9202228.6 wird ein mehrteiliges Hitzeschild beschrieben, welches zur Bildung eines wärmeisolierenden Unterbodenaufbaus mit Hilfe von Abstandshaltern am Fahrzeugunterboden befestigt ist. Dieser wärmeisolierende Unterbodenaufbau weist zwischen Hitzeschild und Unterboden einen vorn und hinten offenen Luftspalt auf, so dass der Fahrtwind im Zwischenraum zwischen Hitzeschild und Fahrzeugunterboden durchströmen kann, um auf diese Weise Wärme abführen zu können.

Leider zeigt sich bei modernen Fahrzeugen, dass sich die vom Motor und den dazugehörigen Aggregaten aufgeheizte Luft - wegen der zunehmend verbesserten Motorraumisolationen - im Motorraum staut und weiter aufheizt. Es ist keine Seltenheit, dass diese selbsterhitzte Luft Temperaturen von bis zu 120°C und mehr aufweist. Diese selbsterhitzte Luft entweicht aus dem offenen Bodenraum und durchströmt beim Fahren im wesentlichen auch den Zwischenraum zwischen Hitzeschild und Fahrzeugboden. Es versteht sich, dass dieser Umstand zu einer unerwünschten Temperaturerhöhung im Unterbodenbereich führt und sogar zu frühzeitiger Alterung oder Zerstörung von Innenverkleidungen oder anderen sensiblen Komponenten führt.

Es ist deshalb Aufgabe der vorliegenden Erfindung, einen wärmeisolierenden Unterbodenaufbau mit einem vom Fahrzeugunterboden beabstandet angeordneten Hitzeschild zu schaffen, bei welchem Unterbodenaufbau sichergestellt werden kann, dass die Temperaturen im Zwischenraum zwischen dem Hitzeschild und dem Fahrzeugunterboden nicht wesentlich über 80° C steigen.

Diese Aufgabe wird efindungsgemäss durch einen wärmeisolierenden Unterbodenaufbau mit den Merkmalen des Anspruchs 1 gelöst und insbesondere durch einen Unterbodenaufbau, bei welchem der Fahrzeugunterboden in den Bereichen erhöhter Wärmeabstrahlung, d.h. im Bereich des Abgasrohrs, des Katalysators oder Schalldämpfers mit einem Hitzeschild versehen ist, welches vom Unterboden beabstandet angeordnet ist, um einen offenen Zwischenraum zu bilden, wobei der Unterbodenaufbau strömungshemmende Mittel umfasst, welche ein Durchströmen des Zwischenraums mit selbsterhitzter Aussenluft, insb. Heissluft aus dem Motorraum, hemmen. Unter "selbsterhitzter Aussenluft" soll im Folgenden Luft verstanden werden, welche vom fahrzeugeigenen Motor und den dazugehörigen Aggregaten erhitzt worden ist. Es soll hier explizit erwähnt sein, dass dieser Zwischenraum, im Folgenden "offener Zwischenraum" genannt, kein geschlossener Hohlraum ist, sondern von Luft durchströmbar ist, insbesondere um die von der jeweiligen Wärmequelle im Zwischenraum erzeugte Heissluft aus dem Zwischenraum entweichen oder abströmen lassen zu können.

In einer ersten Ausführungsform sind die strömungshemmenden Mittel partiell als luftundurchlässige Zwischenraumbegrenzung ausgebildet, welche den Zwischenraum mindestens anströmseitig (luvseitig) verschliessen. Insbesondere eignet sich ein Luftleitblech als vordere Zwischenraumbegrenzung. Es versteht sich, dass der Zwischenraum direkt hinter einem solchen Luftleitblech eine Öffnung aufweisen kann, aus welcher die im Zwischenraum erzeugte Heissluft entweichen kann. Es liegt im Bereich des normalen fachmännischen Handels, dieses Luftleitblech so zu gestalten, dass diese Luft vom aussen vorbeiströmenden Fahrtwind mitgerissen werden kann.

In einer weiteren Ausführungsform bilden die strömungshemmenden Mittel eine luftdurchlässige Zwischenraumbegrenzung und weist diese Zwischenraumbegrenzung mindestens bereichsweise thermisch stabiles Fasermaterial auf. Derartiges Fasermaterial ist dem Fachmann hinlänglich bekannt und kann anorganische oder organische Fasern, insbesondere Keramikfasern, umfassen.

In einer bevorzugten Ausführungsform ist der Zwischenraum mindestens partiell mit einem Wärmeisolationsmaterial versehen, welches luftdurchlässig ist.

In einer Weiterbildung der vorliegenden Erfindung können Mittel vorgesehen sein, um den Zwischenraum mit kühler Umgebungsluft zu verbinden. Im Folgenden soll unter dem Begriff "kühle Umgebungsluft" die nicht vom Fahrzeug selbsterhitzte Aussenluft verstanden werden.

Im Folgenden soll die Erfindung anhand eines Ausführungsbeispiels und mit Hilfe der Figuren näher erläutert werden. Dabei zeigen:
- Figur 1:: schematische Darstellung des erfindungsgemässen Unterbodenaufbaus mit einem Luftleitblech.
- Figur 2:: schematische Darstellung des erfindungsgemässen Unterbodenaufbaus mit einem anströmseitig verschlossenen Zwischenraum.
- Figur 3:: schematische Darstellung des erfindungsgemässen Unterbodenaufbaus mit einer luftdurchlässigen Zwischenraumbegrenzung.
- Figur 4:: schematische Darstellung des erfindungsgemässen Unterbodenaufbaus mit einer luftdurchlässigen Wärmeisolation.

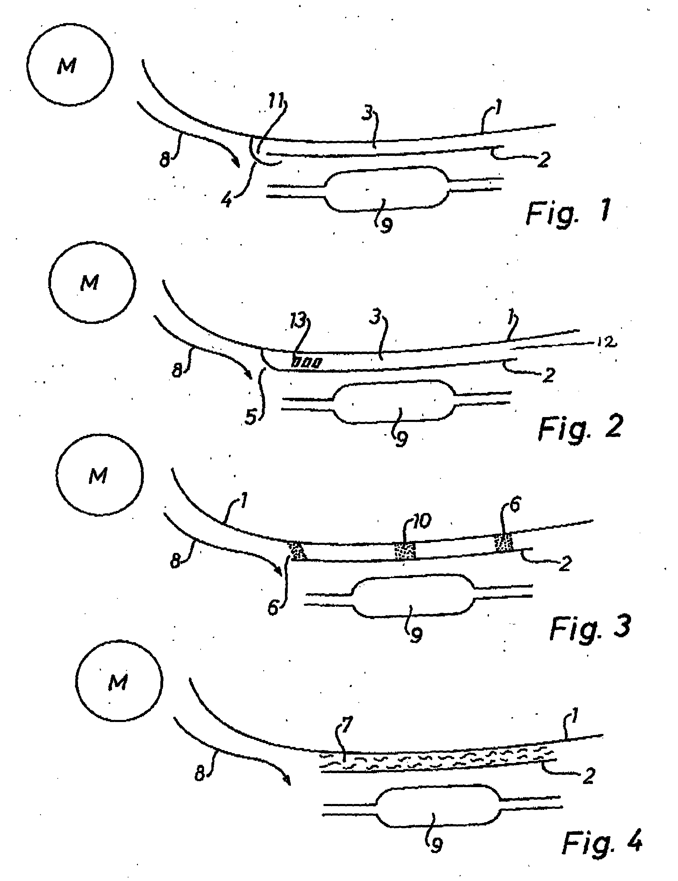

Figur 1 zeigt in schematischer Weise den Aufbau und das Funktionieren des erfindungsgemässen Unterbodenaufbaus. Dieser Unterbodenaufbau weist einen Fahrzeugunterboden 1 auf, an welchem ein Hitzeschild 2 beabstandet angeordnet ist, derart, dass ein offener Zwischenraum 3, gebildet wird. Dieses Hitzeschild 2 liegt im Bereich einer fahrzeugeigenen Wärmequelle 9, insbesondere im Bereich eines Abgasrohrs, eines Katalysators oder dergleichen. Erfindungsgemäss weist der Zwischenraum 3 strömungshemmende Mittel 4, 5, 6, 7 auf, welche die aus dem Motorraum M anströmende selbsterhitzte Aussenluft 8, nicht durch den offenen Zwischenraum 3, strömen lassen. Bei der in Figur 1 dargestellten Ausführungsform, weisen die strömungshemmenden Mittel die Form eines Luftleitblechs 4, auf. Dieses Luftleitblech 4 kann direkt Teil des Hitzeschilds 2 sein oder als separates Bauteil ausgebildet sein. In einer besonderen Ausführungsform ist direkt hinter diesem Luftleitblech 4 mindestens eine Öffnung 11 (1 oder mehr cm) vorgesehen, aus welcher die im offenen Zwischenraum 3 erhitzte Luft austreten kann und insbesondere von der anströmenden Aussenluft 8 mitgerissen werden kann.

Figur 2 zeigt eine weitere einfache Ausführungsform des erfindungsgemässen Unterbodenaufbaus. Dieser umfasst wiederum einen Fahrzeugunterboden 1, an welchen ein Hitzeschild 2 derart befestigt ist, dass sich ein Zwischenraum 3 bildet. Dieser offene Zwischenraum ist mit Hilfe einer luftundurchlässigen Zwischenraumbegrenzung 5, insbesondere einem Hitzeschild-Abschlussstücks, anströmseitig verschlossen. Damit wird verhindert, dass die vom Motorraum M anströmende selbsterhitzte Luft 8 in den Zwischenraum 3 gelangt. Die von der Wärmequelle 9 im Innern des Zwischenraums 3 erwärmte Luft, kann über eine rückseitige Öffnung 12 oder über seitliche Fenster 13 entweichen.

Bei der in Figur 3 gezeigten Ausführungsform des erfindungsgemässen Unterbodenaufbaus sind die strömungshemmenden Mittel als lokal angeordnete, thermisch stabile Fasermaterialpolster 10 ausgebildet. Derart kann die von der Wärmequelle 9 im Zwischenraum 3 erwärmte Luft aus diesem Zwischenraum 3 entweichen, ohne dass die aus dem Motorraum M anströmende selbsterhitzte Aussenluft 8, einströmen kann.

Hierdurch entsteht ein Wärmeisolierender Unterbodenaufbau, bei welchem ein Fahrzeug-Unterboden (1) mindestens teilweise mit einem von diesem Unterboden (1) beabstandet angeordneten Hitzeschild (2) versehen ist, um einen offenen Zwischenraum (3) zu bilden, wobei dieser Unterbodenaufbau strömungshemmende Mittel (6, 10) umfasst, welche ein Durchströmen des Zwischenraums (3) mit erhitzter Aussenluft (8), insbesondere Heissluft aus dem Motorraum (M) hemmen. Die strömungshemmende Mittel können als eine luftdurchlässige Zwischenraumbegrenzung (6) ausgebildet sein. Diese Zwischenraumbegrenzung kann thermisch stabiles Fasermaterial umfassen.

In einer besonderen Ausführungsform des erfindungsgemässen Unterbodenausbaus ist der Raum zwischen dem Hitzeschild 2 und dem Unterboden 1 mit einem luftdurchlässigen Wärmeisolationsmaterial 7 versehen. Dieses Wärmeisolationsmaterial 7 füllt den Zwischenraum 3 vollständig aus. Es versteht sich, dass auch bei den oben gezeigten Ausführungsformen der Zwischenraum 3, mindestens teilweise luftdurchlässiges Wärmeisolationsmaterial 7 enthalten kann.

Die Vorteile des erfindungsgemässen Unterbodenaufbaus sind dem Fachmann unmittelbar ersichtlich und insbesondere darin zu sehen, dass die aus dem Motorraum M anströmende, selbsterhitzte Aussenluft 8 daran gehindert wird, in den Zwischenraum 3, zwischen dem Hitzeschild 2 und dem Fahrzeugunterboden 1, zu strömen.

Weiterbildungen und besondere Gestaltungen des erfindungsgemässen Unterbodenaufbaus liegen im gewöhnlichen technischen Handeln des Fachmanns. So wird dieser in Abhängigkeit der jeweiligen Anforderungen und/oder Geometrien den Abstand zwischen dem Hitzeschild 2 und dem Unterboden zwischen 5 bis 20 mm variieren oder ein einfaches resp. mehrlagiges Hitzeschild 2, verwenden. Ebenso kann er das Luftleitblech 4 in geeigneter Weise gestalten, insbesondere derart, dass die im Zwischenraum 3 vorliegende Luft aus diesem Raum abgesogen wird. Die Materialwahl wird der Fachmann ebenfalls den vorliegenden Erfordernissen anpassen.

## Patentansprüche

1. Wärmeisolierender Unterbodenaufbau, bei welchem ein Fahrzeug Unterboden (1) mindestens teilweise mit einem von diesem Unterboden (1) beabstandet angeordneten Hitzeschild (2) versehen ist, um einen offenen Zwischenraum (3) zu bilden, **dadurch gekennzeichnet, dass** zusätzlich in diesem Unterbodenaufbau strömungshemmenden Mittel (4, 5, 6, 7) angeordnet sind derart, dass anströmende selbsterhitzte Aussenluft (8) nicht durch den offenen Zwischenraum (3) strömen kann.

2. Wärmeisolierender Unterbodenaufbau nach Anspruch 1, **dadurch gekennzeichnet, dass** die strömungshemmenden Mittel (4, 5, 6, 7) als luftundurchlässige Zwischenraumbegrenzung (5) ausgebildet sind, welche den Zwischenraum anströmseitig verschliesst.

3. Wärmeisolierender Unterbodenaufbau nach Anspruch 2, **dadurch gekennzeichnet, dass** die strömungshemmenden Mittel (4, 5, 6, 7) ein Luftleitblech (4) ist.

4. Wärmeisolierender Unterbodenaufbau nach Anspruch 3, wobei den Luftleitblech Teil des Hitzeschildes ist.

5. Wärmeisolierendes Unterbodenaufbau nach Anspruch 3 oder 4, wobei direkt hinter das Luftleitblech mindestens eine Öffnung 11 angeordnet ist, derart dass die im offenen Zwischenraum erhitzte Luft austreten kann und von insbesondere der anströmenden Aussenluft (8) mitgerissen werden kann.

6. Wärmeisolierender Unterbodenaufbau nach Anspruch 1, **dadurch gekennzeichnet, dass** die strömungshemmenden Mittel (4, 5, 6, 7) als eine luftdurchlässige Zwischenraumbegrenzung (6) ausgebildet sind.

7. Wärmeisolierender Unterbodenaufbau nach Anspruch 6, **dadurch gekennzeichnet, dass** die luftdurchlässige Zwischenraumbegrenzung (6) thermisch stabiles Fasermaterial umfasst derart angeordnet, dass der Zwischenraum gesamt oder teilweise ausgefühlt wird.

8. Wärmeisolierender Unterbodenaufbau nach Anspruch 1, **dadurch gekennzeichnet, dass** der Zwischenraum (3) mit luftdurchlässigem Wärmeisolationsmaterial (7) versehen ist.

9. Wärmeisolierender Unterbodenaufbau nach Anspruch 1, **dadurch gekennzeichnet, dass** das Hitzeschild (2) als einlagiges oder mehrlagiges Hitzeschild ausgebildet ist.

## Claims

1. Heat-insulating underbody structure, in which a vehicle underbody (1) is provided at least partially with a heat shield (2) arranged, spaced apart from this underbody (1), in order to form an open interspace (3), **characterized in that**, additionally, flow-inhibiting means (4, 5, 6, 7) are arranged in this underbody structure, in such a way that inflowing self-heated outside air (8) cannot flow through the open interspace (3).

2. Heat-insulating underbody structure according to Claim 1, **characterized in that** the flow-inhibiting means (4, 5, 6, 7) are designed as an air-permeable interspace boundary (5) which closes the interspace on the inflow side.

3. Heat-insulating underbody structure according to Claim 2, **characterized in that** the flow-inhibiting means (4, 5, 6, 7) are an air guide plate (4).

4. Heat-insulating underbody structure according to Claim 3, the air guide plate being part of the heat shield.

5. Heat-insulating underbody structure according to Claim 3 or 4, at least one orifice (11) being arranged directly behind the air guide plate, in such a way that the air heated in the open interspace can emerge and can be entrained, in particular, by the inflowing outside air (8).

6. Heat-insulating underbody structure according to Claim 1, **characterized in that** the flow-inhibiting means (4, 5, 6, 7) are designed as an air-permeable interspace boundary (6).

7. Heat-insulating underbody structure according to Claim 6, **characterized in that** the air-permeable interspace boundary (6) comprises thermally stable fibre material arranged in such a way that the interspace is filled completely or partially.

8. Heat-insulating underbody structure according to Claim 1, **characterized in that** the interspace (3) is provided with air-permeable heat insulation material (7).

9. Heat-insulating underbody structure according to Claim 1, **characterized in that** the heat shield (2) is designed as a single-ply multiple-ply heat shield.

## Revendications

1. Structure de bas de caisse à pouvoir d'isolation thermique, dans laquelle un bas de caisse de véhicule (1) est pourvu au moins en partie d'un bouclier thermique (2) disposé à distance de ce bas de caisse (1), afin de former un espace intermédiaire ouvert (3), **caractérisée en ce que** l'on dispose en outre dans cette structure de bas de caisse de moyens bloquant l'écoulement (4, 5, 6, 7), de telle sorte que l'air extérieur (8) affluant, chauffé automatiquement, ne puisse pas s'écouler à travers l'espace intermédiaire ouvert (3).

2. Structure de bas de caisse à pouvoir d'isolation thermique selon la revendication 1, **caractérisée en ce que** les moyens bloquant l'écoulement (4, 5, 6, 7) sont réalisés sous forme de limitation (5) de l'espace intermédiaire imperméable à l'air, qui ferme l'espace intermédiaire du côté de l'afflux.

3. Structure de bas de caisse à pouvoir d'isolation thermique selon la revendication 2, **caractérisée en ce que** les moyens bloquant l'écoulement (4, 5, 6, 7) sont une tôle conductrice de l'air (4).

4. Structure de bas de caisse à pouvoir d'isolation thermique selon la revendication 3, dans laquelle la tôle conductrice de l'air fait partie du bouclier thermique.

5. Structure de bas de caisse à pouvoir d'isolation thermique selon la revendication 3 ou 4, dans laquelle au moins une ouverture (11) est disposée directement derrière la tôle conductrice de l'air, de telle sorte que l'air chauffé dans l'espace intermédiaire ouvert puisse sortir et être entraîné notamment par l'air extérieur affluant (8).

6. Structure de bas de caisse à pouvoir d'isolation thermique selon la revendication 1, **caractérisée en ce que** les moyens bloquant l'écoulement (4, 5, 6, 7) sont réalisés sous forme d'une limitation (6) de l'espace intermédiaire perméable à l'air.

7. Structure de bas de caisse à pouvoir d'isolation thermique selon la revendication 6, **caractérisée en ce que** la limitation (6) de l'espace intermédiaire perméable à l'air comprend un matériau fibreux stable thermiquement, disposé de telle sorte que l'espace intermédiaire soit complètement ou partiellement rempli.

8. Structure de bas de caisse à pouvoir d'isolation thermique selon la revendication 1, **caractérisée en ce que** l'espace intermédiaire (3) est pourvu de matériau d'isolation thermique (7) perméable à l'air.

9. Structure de bas de caisse à pouvoir d'isolation thermique selon la revendication 1, **caractérisée en ce que** le bouclier thermique (2) est réalisé sous forme de bouclier thermique à une ou plusieurs couches.
